(19) Europäisches Patentamt / European Patent Office / Office européen des brevets

(11) EP 1 440 728 B1

(12) **EUROPÄISCHE PATENTSCHRIFT**

(45) Veröffentlichungstag und Bekanntmachung des Hinweises auf die Patenterteilung:
**27.02.2008 Patentblatt 2008/09**

(21) Anmeldenummer: **04000381.6**

(22) Anmeldetag: **10.01.2004**

(51) Int Cl.:
***B01F 17/54*** *(2006.01)*
***C09D 11/00*** *(2006.01)*
***C09D 11/10*** *(2006.01)*
***C09D 11/02*** *(2006.01)*
***C09D 167/02*** *(2006.01)*
***C09D 167/04*** *(2006.01)*
***C09D 183/10*** *(2006.01)*

(54) **Verwendung von Siliconharzen als Dispergiermittel**

Use of silicone resin as dispersant

Utilisation de résine silicone comme agent dispersant.

(84) Benannte Vertragsstaaten:
**AT BE BG CH CY CZ DE DK EE ES FI FR GB GR HU IE IT LI LU MC NL PT RO SE SI SK TR**

(30) Priorität: **24.01.2003 DE 10302743**

(43) Veröffentlichungstag der Anmeldung:
**28.07.2004 Patentblatt 2004/31**

(73) Patentinhaber: **Evonik Goldschmidt GmbH**
**45127 Essen (DE)**

(72) Erfinder:
- **Brandt, Petra**
  **45307 Essen (DE)**
- **Lehmann, Kathrin**
  **51377 Leverkusen (DE)**
- **Oestreich, Sascha, Dr.**
  **45279 Essen (DE)**
- **Schröter, Cornelia**
  **47800 Krefeld (DE)**
- **Silber, Stefan, Dr.**
  **47804 Krefeld (DE)**

(56) Entgegenhaltungen:
**EP-A- 0 001 711**
**EP-A- 0 008 090**
**EP-A- 0 092 702**
**EP-A- 0 304 739**
**DE-A- 2 450 656**
**DE-A- 3 214 984**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 440 728 B1

## Beschreibung

Gegenstand der Erfindung ist die Verwendung von Siliconharzen als Dispergiermittel für Feststoffe.

Für die Dispergierung von Feststoffen (z.B. Füllstoffen oder Pigmenten) in flüssigen Medien bedient man sich in der Regel Dispergiermitteln, um eine effektive Dispergierung der Feststoffe zu erreichen, die zur Dispergierung benötigten mechanischen Scherkräfte zu reduzieren und gleichzeitig möglichst hohe Füllgrade zu realisieren. Die Dispergiermittel unterstützen das Aufbrechen von Agglomeraten, benetzen und/oder belegen als oberflächenaktive Materialien die Oberfläche der zu dispergierenden Partikel und stabilisieren diese gegen eine unerwünschte Reagglomeration.

Dispergiermittel erleichtern bei der Herstellung von Farben und Lacken die Einarbeitung von Feststoffen, wie zum Beispiel Füllstoffe und Pigmente, die als wichtige Formulierungsbestandteile das optische Erscheinungsbild und die physikalisch-chemischen Eigenschaften von Farben und Lacken wesentlich bestimmen. Für eine optimale Ausnutzung müssen diese Feststoffe zum einen gleichmäßig in den Formulierungen verteilt werden, zum anderen muß die einmal erreichte Verteilung stabilisiert werden.

Eine Vielzahl verschiedener Substanzen findet heute Verwendung als Dispergiermittel für Feststoffe. Neben sehr einfachen, niedermolekularen Verbindungen wie z.B. Lecithin, Fettsäuren und deren Salzen und Alkylphenolethoxylaten werden auch komplexere Strukturen als Dispergiermittel eingesetzt. Hier sind es speziell amino- und amidofunktionelle Systeme, die breite Verwendung finden. WO-A-00/24503 beschreibt zum Beispiel Dispergiermittel auf der Basis von Polyester-modifizierten Polyaminen. DE-A-197 32 251 beschreibt Versalzungsprodukte von Polyaminen und deren Einsatz als Dispergiermittel für Pigmente und Füllstoffe. Weiterhin beschreiben zum Beispiel WO-A-99/56864, EP-B-0 154 678, EP-A-0 159 678 und EP-A-0 438 836 Dispergiermittel auf Basis von Polyurethanen. Auch amino- und/oder amidofunktionelle Polyacrylate (EP-B-0 879 860) werden eingesetzt. Siliconharzen werden in EP-A-0 092 702 sowie DE-A-3 214 984 beschrieben.

Es besteht jedoch ein wachsender Bedarf an Dispergiermitteln für Feststoffe, die gegenüber dem Stand der Technik weiter verbesserte Eigenschaften zeigen. Gefordert sind Dispergiermittel, die eine möglichst hohe stabilisierende Wirkung auf eine Vielzahl von unterschiedlichen Feststoffen haben. Zum Beispiel kann mit effektiveren Dispergiermitteln die Einsatzmenge von hochpreisigen Pigmenten reduziert werden ohne Einbußen bei der Farbstärke in Kauf nehmen zu müssen.

Weiterhin wird zum Beispiel das Viskositätsverhalten von Farben und Lacken, die Feststoffe, wie Füllstoffe und/oder Pigmente enthalten, wesentlich durch das verwendete Dispergiermittel mitbestimmt. Hier werden vor allem Dispergiermittel nachgefragt, die eine möglichst geringe Viskosität in den flüssigen Farben und Lacken hervorrufen und auch beibehalten, wobei ein Newton'sches Viskositätsverhalten bevorzugt ist.

Es war daher die Aufgabe der vorliegenden Erfindung Dispergiermittel für Feststoffe bereitzustellen, die eine verbesserte Dispergierleistung zeigen und die Viskosität und das rheologische Verhalten von Formulierungen, die Feststoffe enthalten, positiv beeinflussen.

Überraschenderweise wurde nun gefunden, dass vorgenannte Aufgabe gelöst wird durch die Verwendung von Siliconharzen, welche durch Umsetzung eines Alkoxysiloxans mit einem oder mehreren Hydroxylgruppen enthaltenden Polyestern und gegebenenfalls einem oder mehreren niedermolekularen Alkoholen erhalten werden.

Ein Gegenstand der Erfindung ist daher die Verwendung von Siliconharzen, erhältlich durch Umsetzung von

a) einem Alkoxysiloxan der allgemeinen Formel

$$R^2_aSi(OR^1)_bO_{\frac{4-(a+b)}{2}}$$

worin

- $R^1$ eine niedere Alkylgruppe mit bis zu 4 Kohlenstoffatomen,
- $R^2$ eine Alkyl- oder Phenylgruppe,
- a 1,0 bis 1,2,
- b 0,5 bis 1,0 ist,

mit der Maßgabe, dass mindestens 50 Gew.-% der Formel $[R^2Si(OR^1)O]_n$, n = 3 bis 8, entsprechen, mit

b) einem oder mehreren Hydroxylgruppen enthaltenden Polyestern und gegebenenfalls

c) einem oder mehreren niedermolekularen Alkoholen,

wobei das Alkoxysiloxan, bezogen auf den Gehalt an ($OR^1$)-Gruppen in a), vollständig oder partiell umgesetzt werden kann, man die Umsetzung jedoch mindestens so weit führt, dass eine klare Lösung erhalten wird, als Dispergiermittel für Feststoffe.

Beispiele für den Rest $R^1$ sind niedere Alkylgruppen mit bis zu 4 Kohlenstoffatomen, vorzugsweise Methyl-, Ethyl-, Propyl-, iso-Propyl-, und/oder Butylreste. Besonders bevorzugt ist der Ethylrest.

Beispiele für den Rest $R^2$ sind vorzugsweise Alkyl- oder Phenylgruppen, Alkylreste, wie der Methyl-, Ethyl-, Propyl-, iso-Propyl-, Butyl-, Hexyl- und Octylrest, sowie der Phenylrest. Besonders bevorzugt ist der Phenylrest.

Hydroxylgruppen enthaltende Polyester (b) im Sinne der vorliegenden Erfindung sind Polyester mit mindestens zwei Estergruppen je Molekül, die das Reaktionsprodukt von einer oder mehreren mindestens difunktionellen Carbonsäuren oder deren Alkylester bzw. deren Anhydride mit einem oder mehreren mehrwertigen Alkoholen mit mindestens zwei Hydroxylgruppen darstellen.

Weiterhin können Hydroxylgruppen enthaltende Polyester (b) im Sinne der vorliegenden Erfindung das Reaktionsprodukt von einem oder mehreren mehrwertigen Alkoholen mit mindestens zwei Hydroxylgruppen mit einer oder mehreren Hydroxyl-funktionellen Carbonsäuren und/oder deren Lactonen sein.

Beispiele für mindestens difunktionelle Carbonsäuren, die als eine Art der Reaktionsteilnehmer bei der Herstellung von Hydroxylgruppen enthaltenden Polyestern (b) eingesetzt werden können, sind aliphatische Dicarbonsäuren bzw. deren Ester bzw. deren Anhydride, wie Oxalsäure, Bernsteinsäure, Glutarsäure, Adipinsäure, Pimelinsäure, Suberinsäure, Sebacinsäure, Decandicarbonsäure, Dodecandicarbonsäure und 2,2,4-Trimethyladipinsäure, sowie ungesättigte Dicarbonsäuren, wie Maleinsäure und Fumarsäure, sowie aromatische Dicarbonsäuren bzw. deren Ester bzw. deren Anhydride bzw. Polycarbonsäuren, wie Phtalsäure, Isophtalsäure, Terephtalsäure, Tetrahydrophtalsäure, Methyltetrahydrophtalsäure, Naphtalindicarbonsäuren, Trimellitsäure, Dimethylterephtalat und 1,2,4,5-Benzoltetracarbonsäure.

Beispiele für Hydroxyl-funktionelle Carbonsäuren und/oder deren Lactone, die als eine Art der Reaktionsteilnehmer bei der Herstellung von Hydroxylgruppen enthaltenden Polyestern (b) eingesetzt werden können, sind Hydroxylfunktionelle Carbonsäure, wie Milchsäure, 3-Hydroxypropionsäure, 3-Hydroxybuttersäure, 4-Hydroxybuttersäure, 5-Hydroxyvaleriansäure, 4-Hydroxyvaleriansäure, 6-Hydroxyhexansäure, 4-Hydroxyhexansäure, 5-Hydroxydodecansäure, 12-Hydroxydodecansäure, 12-Hydroxyoctadecansäure, Ricinolsäure (12-Hydroxy-9,10-*cis*-octadecensäure) und Lactone, wie β-Propiolacton, β-Butyrolacton, γ-Butyrolacton, 3,6-Dimethyl-1,4-dioxan-2,5-dion, δ-Valerolacton, γ-Valerolacton, ε-Caprolacton, γ-Caprolacton, 4-Methylcaprolacton, 2-Methylcaprolacton und/oder 5-Hydroxydodecansäurelacton, 12-Hydroxydodecansäurelacton.

Bevorzugt sind Hydroxylgruppen enthaltende Polyester mit einem Molekulargewicht von 100 bis 10.000 g/mol. Besonders bevorzugt sind Hydroxylgruppen enthaltende Polyester mit einem Molekulargewicht von 200 bis 5.000 g/mol.

Beispiele für mehrwertige Alkohole mit mindestens zwei Hydroxylgruppen, die als andere Art der Reaktionsteilnehmer bei der Herstellung von Hydroxylgruppen enthaltenden Polyestern (b) eingesetzt werden können, sind zweiwertige Alkohole, wie zum Beispiel Ethylenglykol, Propylenglykol, Butandiol, Hexandiol, Diethylenglykol, Dipropylenglykol, Bisphenol A, Bisphenol A-ethoxylat, Bisphenol A-propoxylat, Bisphenol F, Bisphenol F-ethoxylat, Bisphenol F-propoxylat; dreiwertige Alkohole, wie Trimethylolethan, Trimethylolpropan; vierwertige Alkohole, wie Pentaerythritol, Ditrimethylolpropan und sechwertige Alkohole, wie Sorbitol, Dipentaerythritol.

Beispiele für niedermolekulare Alkohole (c), die gegebenenfalls als Reaktionsteilnehmer bei der Herstellung der Siliconharze eingesetzt werden können, sind einwertige Alkohole, wie Methanol, Ethanol, Propanol, iso-Propanol, 2-Butanol, isoButanol, Hexanol, Dodecanol; zweiwertige Alkohole, wie zum Beispiel Ethylenglykol, Propylenglykol, Butandiol, Hexandiol, Diethylenglykol, Dipropylenglykol; dreiwertige Alkohole, wie Trimethylolethan, Trimethylolpropan; vierwertige Alkohole, wie Pentaerythritol, Ditrimethylolpropan; sechwertige Alkohole, wie Dipentaerythritol und Aminoalkohole, wie 2-Aminoethanol, 2-(2-Aminoethylamino)-ethanol, Triethanolamin, Diethanolamin, Propanolamin, 2-Amino-1,3-propandiol, 2-Aminoisobutanol, Aminohexanol, Aminophenylethanol und Hydroxyethylpyridin.

Besonders bevorzugt als niedermolekulare Alkohole, die gegebenenfalls als Reaktionsteilnehmer bei der Herstellung der Siliconharze eingesetzt werden können, sind Aminoalkohole.

Die Herstellung und die Verwendung der Hydroxylgruppen enthaltenden Polyester (b) und der erfindungsgemäß mitverwendeten Siliconharze als hitzhärtbare Bindemittel ist bekannt und beispielsweise in US-A-3 044 979, DE-B-22 32 419, DE-A-25 21 170, DE-C-28 28 990, DE-C-29 49 725, DE-A-32 14 984 und DE-C-34 12 648 beschrieben.

Ein Feststoff im Sinne der vorliegenden Erfindung kann prinzipiell jedes feste organische oder anorganische Material sein, welches in den Beschichtungen, Druckfarben und/oder Drucklacken unlöslich ist und dessen fein verteilte Form darin stabilisiert werden soll.

Beispiele solcher Feststoffe sind Pigmente, Füllstoffe, Farbstoffe, optische Aufheller, keramische Materialien, magnetische Materialien, Metalle und Biozide, Agrochemikalien und Pharmaka welche als Dispersionen angewendet werden.

Bevorzugte Feststoffe sind Pigmente, wie sie zum Beispiel im "Colour Index, Third Edition, Volume 3; The Society of Dyers and Colorists (1982)" und den nachfolgenden, überarbeiteten Auflagen genannt werden.

Beispiele für Pigmente sind anorganische Pigmente, wie Ruße, Titandioxide, Zinkoxide, Preußischblau, Eisenoxide, Cadmiumsulfide, Chrompigmente, wie zum Beispiel Chromate, Molybdate und gemischte Chromate und Sulfate des Bleis, Zink, Barium, Calcium und deren Mischungen. Weitere Beispiele für anorganische Pigmente werden in dem Buch "H. Endriss, Aktuelle anorganische Bunt-Pigmente, Vincentz Verlag, Hannover (1997)" genannt.

Beispiele für organische Pigmente sind solche aus der Gruppe der Azo-, Diazo-, kondensierten Azo-, Naphtol-, Metallkomplex-, Thioindigo-, Indanthron-, Isoindanthron-, Anthanthron-, Anthrachinon-, Isodibenzanthron-, Triphendioxazin-, Chinacridon-, Perylen-, Diketopyrrolopyrrol und Phtalocyaninpigmente. Weitere Beispiele für organische Pigmente werden in dem Buch "W. Herbst, K. Hunger, Industrial Organic Pigments, VCH, Weinheim (1993)" genannt.

Weitere bevorzugte Feststoffe sind Füllstoffe, wie zum Beispiel Talk, Kaolin, Kieselsäuren, Baryte und Kalk; keramische Materialien, wie zum Beispiel Aluminiumoxide, Silikate, Zirkonoxide, Titanoxide, Bornitride, Siliziumnitride, Borcarbide, gemischte Silizium-Aluminiumnitride und Metall-Titanate; magnetische Materialien, wie zum Beispiel magnetische Oxide von Übergangsmetallen, wie Eisenoxide, Kobalt dotierte Eisenoxide und Ferrite; Metalle, wie zum Beispiel Eisen, Nickel, Kobalt und deren Legierungen; und Biozide, Agrochemikalien und Pharmaka, wie zum Beispiel die Fungizide.

Besonders bevorzugte Feststoffe sind Pigmente, insbesondere Schwarzpigmente, wie zum Beispiel (Gas-) Ruße.

Ebenfalls Gegenstand der Erfindung ist die Mitverwendung der Siliconharze als Dispergiermittel für Feststoffe zur Herstellung von Beschichtungen, Druckfarben und/oder Drucklacken.

Beschichtungen, Druckfarben und/oder Drucklacke im Sinne der vorliegenden Erfindung können verschiedenste Produkte sein. Es können zum Beispiel Füllstoffe, Pigmente und/oder Farbstoffe enthaltende Systeme sein. Als flüssige Phase können sie organische Lösemittel und/oder Wasser enthalten, wie dies in Abhängigkeit von den verwendeten Bindemitteln als Stand der Technik bekannt ist. Die Beschichtungen, Druckfarben und/oder Drucklacke müssen jedoch nicht notwendigerweise eine flüssige Phase enthalten, sondern können auch sogenannte Pulverlacke sein. Ebenso können die Beschichtungen, Druckfarben und/oder Drucklacke die üblichen dem Stand der Technik entsprechenden Zusatzstoffe enthalten, wie zum Beispiel Netzmittel, Verlaufshilfsmittel oder Entschäumer etc. und nach unterschiedlichen, dem Stand der Technik gemäßen Verfahren aushärten, vernetzen und/oder trocknen.

Beschichtungen, Druckfarben und/oder Drucklacke im Sinne der vorliegenden Erfindung können durch Direktanreibung oder unter Verwendung von Pigmentpasten (Full Mixing und Tinting) hergestellt werden. Bei der Direktanreibung wird im Mahlansatz die komplette Pigment/Füllstoff-Mischung im Bindemittel angerieben und anschließend mit den übrigen Formulierungskomponenten versetzt.

Bei der Herstellung über Pigmentpasten (Full Mixing) werden Pigmente zunächst einzeln in einer hochkonzentrierten Paste angerieben. Hierdurch kann der Dispergierprozess dem jeweiligen Pigment optimal angepasst werden. Pigmentpasten können mit speziellen Anreibeharzen oder auch bindemittelfrei hergestellt werden. Die Pasten werden mit dem fertigen formulierten Klarlack, der alle restlichen Lackkomponenten (Bindemittel, Additive, Lösemittel etc.) enthält, gemischt. Weiterhin können diese Pigmentpasten zum Abtönen von fertigen Weißlacken (Tinting) oder zur Farbtonkorrektur von fertigen Buntlacken (sog. Abtönpasten) eingesetzt werden.

Ein weiterer Gegenstand der Erfindung ist daher die Mitverwendung von Siliconharzen als Dispergiermittel für Feststoffe in Pigmentpasten.

Beispiele für Beschichtungen im Sinne der vorliegenden Erfindung sind lösemittelhaltige Lacke und Farben, Pulverlacke, UV-härtbare Lacke und Farben, Low Solids, Medium Solids, High Solids, Automobillacke, Holzlacke, Einbrennlacke, 2K-Lacke, Metallbeschichtungen, Tonerzusammensetzungen. Weitere Beispiele für Beschichtungen werden in der einschlägigen Fachliteratur genannt.

Beispiele für Druckfarben und/oder Drucklacke im Sinne der vorliegenden Erfindung sind lösemittelbasierende Druckfarben, Flexodruckfarben, Tiefdruckfarben, Buchdruck- bzw. Hochdruckfarben, Offsetdruckfarben, Litho-Druckfarben, Druckfarben für den Verpackungsdruck, Siebdruckfarben, Drucktinten, wie Drucktinten für Tintenstrahldrucker, Drucklacke, wie Überdrucklacke.

Beispiele für Druckfarben- und/oder Drucklackformulierungen werden in "E.W. Flick, Printing Ink and Overprint Varnish Formulations- Recent Developments, Noyes Publications, Park Ridge NJ, (1990)" genannt.

Bevorzugte Beispiele für Beschichtungen, Druckfarben und/oder Drucklacke im Sinne der vorliegenden Erfindung sind strahlungshärtbare Beschichtungen, Druckfarben und/oder Drucklacke, wie radikalisch UV/EB-härtbare Formulierungen (UV = ultraviolette Strahlung; EB = Elektronenstrahlung) oder kationisch UV/EBhärtbare Formulierungen. Beispiele für strahlungshärtbare Beschichtungen, Druckfarben und/oder Drucklacke im Sinne der vorliegenden Erfindung werden in "C. Lowe, G. Webster, S. Kessel, I. McDonald, G. Rayner; Chemistry & Technology of UV & EB Formulation for Coatings, Inks & Paints, Volume 4 - Formulation, Wiley/Sita, London, (1997)" genannt.

Die erfindungsgemäßen Siliconharze können in den Beschichtungen, Druckfarben und/oder Drucklacken in einer Konzentration von 0,01 bis 10,0 Gew.-% vorzugsweise von 0,5 bis 5 Gew.-% mitverwendet werden. Gegebenenfalls

können sie in Mischung mit Netz- und Dispergiermitteln des Standes der Technik eingesetzt werden.

Ausführungsbeispiele:

Die Erfindung wird nachfolgend anhand von Ausführungsbeispielen näher erläutert.

Als erfindungsgemäß mitzuverwendende Siliconharze wurden kommerziell erhältliche Produkte eingesetzt. Die Produkte sind unter folgenden Handelsnamen von Tego Chemie Service GmbH, Essen erhältlich: Silikophtal® HTF, Silikophtal® HTS, Silikophtal® HTL-2. Das in der Lieferform enthaltende Lösungsmittel wurde destillativ entfernt und gegen Tripropylenglykoldiacrylat (TPGDA) ausgetauscht (35 Gew.-% Siliconharz in TPGDA).

Weiterhin wurde ein aminofunktionelles Siliconharz als Dispergiermittel mitverwendet. Das Produkt wurde wie folgt hergestellt:

In einem 500 ml-Dreihalskolben, der mit einem Rührer, Intensivkühler, Thermometer und Tropftrichter ausgerüstet ist, werden 100 g (0,15 mol) eines Alkoxysiloxans mit der durchschnittlichen Formel:

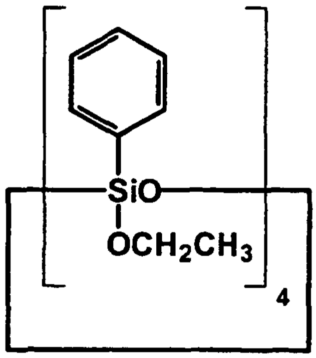

,

54 g (0,135 mol ) eines Hydroxylgruppen enthaltenden Polyesters mit einer OH-Zahl von 10 mol OH/kg mit der durchschnittlichen Formel:

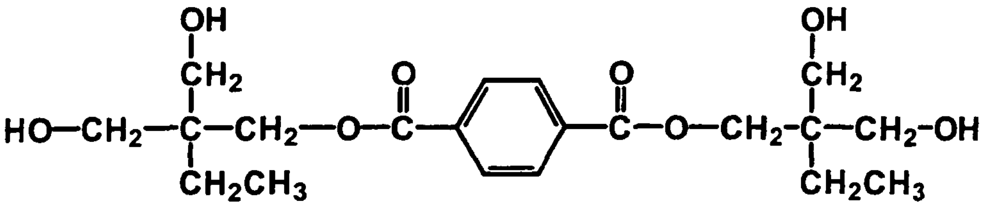

,

1,85 g (0,015 mol) 2-(2-Hydroxyethyl)pyridin und 100 g Methoxypropylacetat gemischt. Es werden 0,25 g Tetrabutyltitanat zugegeben und die Mischung langsam auf 140 °C erhitzt. Dabei wird kontinuierlich Ethanol abdestilliert. Die Reaktion wird beendet, sobald die Reaktionsmischung ihre Trübung verloren hat. Man erhält ein gelbes, viskoses Produkt. Das Lösemittel Methoxypropylacetat wird destillativ im Vakuum entfernt und gegen TPGDA (35 Gew.-% aminofunktionelles Siliconharz in TPGDA) ausgetauscht.

Als Dispergiermittel gemäß dem Stand der Technik wurden folgende handelsübliche Dispergiermittel mitverwendet:

Solsperse® 24000 (Avecia Ltd.), Disperbyk® 168 (BYK-Chemie GmbH), Texaphor® P-61 (Cognis GmbH & Co.KG).

Aus der Vielzahl der möglichen Feststoffe wurden folgende handelsübliche Pigmente ausgewählt:

Irgalite® Yellow BAW (Ciba) ; Raven® 450 (Columbia Chemicals Co.).

Die Dispergiermittel und Feststoffe wurden in folgenden Rezepturen für Beschichtungen, Druckfarben und/oder Drucklacke verglichen:

Tabelle 1: Rezeptur für UV-härtende Flexodruckfarbe

| Rohstoff | Gew.-% |
|---|---|
| Ebecryl® 812 (UCB) | 30 |
| Ebecryl® 220 (UCB) | 9 |
| Laromer® TPGDA (BASF) | 20(Gelb); 22(Ruß) |
| Laromer® TMPTA (BASF) | 13 |
| Dispergiermittel (Wirkstoffmenge) | 3 |
| Pigment | 13(Gelb); 11(Ruß) |
| Irgacure® 1300 (Ciba) | 7 |
| Irgacure® 819 (Ciba) (nur bei Gelb) | 1,6 |
| Darocure® 1173 (Ciba) (nur bei Ruß) | 1,6 |
| Airex® 920 (Tego) | 1,5 |

Das Verhältnis von Pigmentmenge zur Menge des Dispergieradditivs (reine Wirkstoffsubstanz) wurde in allen Versuchen konstant gehalten.
Rezeptfremde Lösemittel, die bei der Verwendung handelsüblicher, lösemittelhaltiger Dispergieradditive in die Einwaage gelangten, wurden nicht berücksichtigt, sondern nur der reine Wirkstoffanteil.

Die mit den erfindungsgemäß mitverwendeten Siliconharzen eingetragene Menge TPGDA wurde entsprechend in der Gesamtformulierung berücksichtigt.

Tabelle 2: Rezeptur für weißen, UV-härtbaren Abtönlack

| Rohstoff | Gew.-% |
|---|---|
| Ebecryl® 812 (UCB) | 30,00 |
| Ebecryl® 220 (UCB) | 8,50 |
| Laromer® TPGDA (BASF) | 19,25 |
| Laromer® TMPTA (BASF) | 12,50 |
| Kronos® 1075 (Kronos) | 25,50 |
| Irgacure® 819 (Ciba) | 1,50 |
| Darocure® 1173 (Ciba) | 1,50 |
| Airex® 920 (Tego) | 1,25 |

Der weiße, UV-härtbare Abtönlack wurde ohne Dispergieradditiv hergestellt, um Umbelegungen oder Konkurrenzreaktionen an den Pigmentoberflächen zu vermeiden.

Herstellung:

Die Rezepturbestandteile werden gemäß den vorstehenden Rezepturen in 250 ml Schraubdeckelgläser eingewogen und mit Glasperlen (100 g Glasperlen auf 100 g Mahlgut) versetzt. Die verschlossenen Gläser werden anschließend in einem Skandex Mischer (Skandex; Typ: BA-S20) für 2 h bei 620 U/min und 40 °C gerüttelt. Anschließend werden die Glasperlen mit Hilfe eines Siebes von der flüssigen Formulierung getrennt.

Viskositätsmessung:

Die Bestimmung des rheologieschen Verhaltens der so hergestellten UV-härtbaren Flexodruckfarbe erfolgt mit Hilfe eines Rotationsviskosimeters. Als Messsystem wurde ein Platte/Kegel-System gewählt (Euro Physics, Rheo 2000 RC20, 45 μm, 25 °C Meßtemperatur).

Dabei wurde folgendes Geschwindigkeitsprogramm gewählt:

10 bis 100 1/s in 30 s
100 bis 1.000 1/s in 40 s
1.000 bis 100 1/s in 40 s
100 bis 10 1/s in 30 s

Es wurde ein solches Programm gewählt, um eventuell auftretende Fließanomalien (z.B. thixotropes oder strukturviskoses Fließverhalten) zu erkennen. Zum Vergleich der Proben untereinander wurden die Viskositätswerte, die bei dem Geschwindigkeitsgefälle von 1.000 $s^{-1}$ gemessen wurden, herangezogen und die Werte bei 100 $s^{-1}$ von Hin- und Rückkurve.

Abgetönte UV-härtbare Flexodruckfarbe:

Zur späteren besseren Beurteilung der Farbstärken wurde die UV-härtbare Flexodruckfarbe mit dem weißen Abtönlack abgemischt. Die Abmischungen wurden im Verhältnis 20 : 1 durchgeführt (39,1 g Weißpigment zu 1 g Pigment). Anschließend wird die Mischung in einem Universalrüttler (Hausschild Engineering, DAC 150 Dual Asymmetric Centrifuge) 30 min homogenisiert.

Applikation:

Die abgetönten UV-härtbaren Flexodruckfarben wurden mit einem Spiralrakel (24 μm) auf Schwarz/Weiß-Karton (Leneta) aufgerakelt. Die Trocknung erfolgte mit Hilfe einer 120 W/cm Quecksilber-Mitteldruck-Dampflampe (Beltron GmbH, Beltron UV-Strahler). Dabei betrug die Geschwindigkeit des Transportbandes 3 m/min.

Prüfmethoden:

Um die Leistungsfähigkeit der Dispergiermittel zu bewerten, wurden die erreichten Farbstärken, der sog. Rub-Out, Viskosität und das rheologische Verhalten zusammengetragen.

Farbmessung:

Die Farbmessung erfolgte mit einem Gerät der Firma X-Rite (Typ: X-Rite SP 60) auf dem weißen Teil des Schwarz/Weiß-Kartons. Von allen Proben wurden die sogenannten L*a*b*-Werte gemäß des CIE-Lab-Systems (CIE = Commission Internationale de l'Eclairage) bestimmt. Das CIE-Lab-System ist als ein dreidimensionales System zur quantitativen Beschreibung der Farborte nützlich. Darin sind auf einer Achse die Farben Grün (negative a-Werte) und Rot (positive a-Werte) aufgetragen, auf der dazu im rechten Winkel angeordneten Achse die Farben Blau (negative b-Werte) und Gelb (positive b-Werte). Die beiden Achsen kreuzen sich im Unbuntpunkt. Die vertikale Achse (Unbuntachse) ist maßgebend für die Helligkeit von weiß (L = 100) bis schwarz (L = 0). Mit dem CIE-Lab-System können nicht nur Farborte, sondern auch Farbabstände durch die Angabe der drei Koordinaten beschrieben werden.

Rub-Out:

Um insbesondere das vertikale Ausschwimmen von Pigmenten in Lackfilmen sichtbar und meßbar zu machen, wird der sog. Rub-Out Test durchgeführt. Dabei reibt man den noch nicht gehärteten Lackfilm mit dem Finger oder einem Pinsel. Haben sich die Pigmente entmischt oder liegen sie stark flockuliert vor, so wird durch den mechanischen Vorgang des Reibens wieder eine homogene Verteilung erzwungen. Es entsteht der angestrebte Farbton des homogenen Gemisches. Der Rub-Out wird als Farbdifferenz zum ungeriebenen Film angegeben. Je kleiner der Rub-Out-Wert bzw. die Farbdifferenz, desto besser wird das Pigment in der Beschichtung, Druckfarbe und/oder Drucklack stabilisiert.

Die angegebenen Werte in den Ergebnistabellen sind jeweils Mittelwerte aus drei Messungen.

Ergebnisse:

Tabelle 3: Vergleich in UV-härtbarer Flexodruckfarbe mit Pigment Raven® 450

| Dispergiermittel | L* | Rub-Out ΔL* | Viskosität (mPas) | Rheologie |
|---|---|---|---|---|
| Nullprobe, kein Dispergiermittel | 79,6 | 20,1 | 657 | nicht newtonisch |
| Silikophtal® HTL-2 | 58,1 | 0,5 | 600 | newtonisch |
| Silikophtal® HTF | 58,7 | 0,5 | 550 | newtonisch |
| Silikophtal® HTL | 57,6 | 0,4 | 557 | newtonisch |
| Silikophtal® HTS | 57,9 | 0,4 | 502 | newtonisch |
| Aminofunktionelles Siliconharz | 57,7 | 0,4 | 688 | newtonisch |
| Solsperse® 24000 | 59,1 | 2,0 | 725 | nicht newtonisch |
| Disperbyk® 168 | 70,7 | 11,1 | 303 | Lösemittel |
| Texaphor® P-61 | 56,0 | 1,3 | 313 | Lösemittel |

Gewünscht sind hier geringe L*, geringe Rub-Out-Werte und eine geringe Viskosität bei newtonischem Fließverhalten. Es zeigt sich, dass die erfindungsgemäß mitverwendeten Siliconharze gegenüber den nicht erfindungsgemäßen Dispergiermitteln des Standes der Technik geringere L*-Werte, einen geringeren Rub-Out ΔL* und ein verbessertes Viskositätsverhalten zeigen.

Die positiven Eigenschaften der erfindungsgemäß mitverwendeten Siliconharze beschränken sich nicht nur auf Schwarzpigmente, sondern erstrecken sich auch auf die anderen üblicherweise im Stand der Technik mitverwendeten Feststoffe. Es ist dem Fachmann zum Beispiel bekannt, dass insbesondere organische Gelbpigmente, wie Diarylid-Yellow-Pigmente, schwierig zu dispergieren sind. Daher wird im folgenden als Beispiel für die universelle Anwendbarkeit der Siliconharze als Dispergiermittel das Gelbpigment Irgalite® Yellow BAW (Ciba) verwendet.

Tabelle 4: Vergleich in UV-härtbarer Flexodruckfarbe mit Pigment Irgalite® Yellow BAW

| Dispergiermittel | b* | Rub-OUt Δb* | Viskosität (mPas) | Rheologie |
|---|---|---|---|---|
| Nullprobe, kein Dispergiermittel | 26,0 | 28,8 | 901 | nicht newtonisch |
| Silikophtal® HTL-2 | 43,2 | 12,4 | 692 | newtonisch |
| Aminofunktionelles Siliconharz | 52,4 | 2,3 | 523 | newtonisch |
| Solsperse® 24000 | 51,6 | 2,6 | 549 | nicht newtonisch |
| Disperbyk® 168 | 50,5 | 2,4 | 463 | Lösemittel |
| Texaphor® P-61 | 55,8 | 2,1 | 552 | Lösemittel |

Gewünscht sind hier hohe b*, geringe Rub-Out-Werte und eine geringe Viskosität bei newtonischem Fließverhalten. Es zeigt sich, dass die erfindungsgemäß mitverwendeten Siliconharze, insbesondere das aminofunktionelle Siliconharz, gegenüber den nicht erfindungsgemäßen Dispergiermitteln des Standes der Technik ein newtonisches Fließverhalten und geringe Viskositäten zeigen.

## Patentansprüche

1. Verwendung von Siliconharzen, erhältlich durch Umsetzung von

a) einem Alkoxysiloxan der allgemeinen Formel

$$R^2_aSi(OR^1)_bO_{\frac{4-(a+b)}{2}}$$

worin

$R^1$ eine niedere Alkylgruppe mit bis zu 4 Kohlenstoffatomen,
$R^2$ eine Alkyl- oder Phenylgruppe,
a 1,0 bis 1,2,
b 0,5 bis 1,0 ist,

mit der Maßgabe, dass mindestens 50 Gew.-% der Formel $[R^2Si(OR^1)O]_n$, n = 3 bis 8, entsprechen, mit
b) einem oder mehreren Hydroxylgruppen enthaltenden Polyestern
und gegebenenfalls
c) einem oder mehreren niedermolekularen Alkoholen,

wobei das Alkoxysiloxan, bezogen auf den Gehalt an $(OR^1)$-Gruppen in a), vollständig oder partiell umgesetzt werden kann, man die Umsetzung jedoch mindestens so weit führt, dass eine klare Lösung erhalten wird,
als Dispergiermittel für Feststoffe.

**2.** Verwendung von Siliconharzen gemäß Anspruch 1, **dadurch gekennzeichnet, dass** als Alkoxysiloxan a) Verbindungen mitverwendet werden in denen $R^1$ ein Ethylrest ist.

**3.** Verwendung von Siliconharzen gemäß Anspruch 1, **dadurch gekennzeichnet, dass** als Alkoxysiloxan a) Verbindungen mitverwendet werden in denen $R^2$ ein Phenylrest ist.

**4.** Verwendung von Siliconharzen gemäß Anspruch 1, **dadurch gekennzeichnet, dass** als Alkoxysiloxan a) Verbindungen mitverwendet werden in denen $R^1$ ein Ethylrest und $R^2$ ein Phenylrest ist.

**5.** Verwendung von Siliconharzen gemäß mindestens einem der Ansprüche 1 bis 4, **dadurch gekennzeichnet, dass** die Hydroxylgruppen enthaltenden Polyester gemäß b) Umsetzungsprodukte aus Dicarbonsäuren oder deren Derivate und Diolen sind.

**6.** Verwendung von Siliconharzen gemäß mindestens einem der Ansprüche 1 bis 4, **dadurch gekennzeichnet, dass** die Hydroxylgruppen enthaltenden Polyester gemäß b) Umsetzungsprodukte aus Hydroxycarbonsäuren und/oder deren Lactone und Diolen sind.

**7.** Verwendung von Siliconharzen gemäß mindestens einem der Ansprüche 1 bis 4, **dadurch gekennzeichnet, dass** die Hydroxylgruppen enthaltenden Polyester gemäß b) Molmassen von 100 bis 10.000 g/mol aufweisen.

**8.** Verwendung von Siliconharzen gemäß mindestens einem der Ansprüche 1 bis 4, **dadurch gekennzeichnet, dass** die niedermolekularen Alkohole gemäß c) eine oder mehrere Verbindungen aus der Gruppe der ein- bis vierwertigen Alkohole und/oder der Aminoalkohole sind.

**9.** Verwendung von Siliconharzen gemäß mindestens einem der Ansprüche 1 bis 8 als Dispergiermittel für Feststoffe zur Herstellung von Beschichtungen, Druckfarben und/oder Drucklacken.

**10.** Verwendung von Siliconharzen gemäß mindestens einem der Ansprüche 1 bis 8 als Dispergiermittel für Feststoffe in Pigmentpasten.

**11.** Verwendung von Siliconharzen gemäß mindestens einem der Ansprüche 1 bis 8 als Dispergiermittel für Feststoffe in strahlungshärtbaren Beschichtungen, Druckfarben und/oder Drucklacken.

**12.** Verwendung von Siliconharzen gemäß mindestens einem der Ansprüche 1 bis 8 als Dispergiermittel für Ruße in Beschichtungen, Druckfarben und/oder Drucklacken.

**13.** Verwendung von Siliconharzen gemäß mindestens einem der Ansprüche 1 bis 8 als Dispergiermittel für Ruße in strahlungshärbaren Beschichtungen, Druckfarben und/oder Drucklacken.

**Claims**

**1.** Use of silicone resins obtainable by reacting

a) an alkoxysiloxane of the general formula

$$R^2_aSi(OR^1)_bO_{\frac{4-(a+b)}{2}}$$

where

$R^1$ is a lower alkyl group having up to 4 carbon atoms,
$R^2$ is an alkyl or phenyl group,
a is from 1.0 to 1.2,
b is from 0.5 to 1.0,

with the proviso that at least 50% by weight corresponds to the formula $[R^2Si(OR^1)O]_n$, n = 3 to 8, with
b) one or more hydroxyl-containing polyesters,
and if desired
c) one or more low molecular weight alcohols,

it being possible for the alkoxysiloxane to be reacted partly or fully, based on the amount of ($OR^1$) groups in a), but the reaction being taken at least to the point where a clear solution is obtained,
as dispersants for solids.

**2.** Use of silicone resins according to Claim 1, **characterized in that** as alkoxysiloxane a) compounds in which $R^1$ is an ethyl radical are used.

**3.** Use of silicone resins according to Claim 1, **characterized in that** as alkoxysiloxane a) compounds in which $R^2$ is a phenyl radical are used.

**4.** Use of silicone resins according to Claim 1, **characterized in that** as alkoxysiloxane a) compounds in which $R^1$ is an ethyl radical and $R^2$ is a phenyl radical are used.

**5.** Use of silicone resins according to at least one of Claims 1 to 4, **characterized in that** the hydroxyl-containing polyesters of b) are reaction products of dicarboxylic acids or derivatives thereof and diols.

**6.** Use of silicone resins according to at least one of Claims 1 to 4, **characterized in that** the hydroxyl-containing polyesters of b) are reaction products of hydroxycarboxylic acids and/or the lactones thereof and diols.

**7.** Use of silicone resins according to at least one of Claims 1 to 4, **characterized in that** the hydroxyl-containing polyesters of b) have molar masses of from 100 to 10000 g/mol.

**8.** Use of silicone resins according to at least one of Claims 1 to 4, **characterized in that** the low molecular weight alcohols of c) are one or more compounds from the group of the monohydric to tetrahydric alcohols and/or of the amino alcohols.

**9.** Use of silicone resins according to at least one of Claims 1 to 8 as dispersants for solids for producing coatings,

printing inks and/or print varnishes.

**10.** Use of silicone resins according to at least one of Claims 1 to 8 as dispersants for solids in pigment pastes.

**11.** Use of silicone resins according to at least one of Claims 1 to 8 as dispersants for solids in radiation-curable coatings, printing inks and/or print varnishes.

**12.** Use of silicone resins according to at least one of Claims 1 to 8 as dispersants for carbon blacks in coatings, printing inks and/or print varnishes.

**13.** Use of silicone resins according to at least one of Claims 1 to 8 as dispersants for carbon blacks in radiation-curable coatings, printing inks and/or print varnishes.

## Revendications

**1.** Utilisation de résines de silicone qui peuvent être obtenues en faisant réagir :

a) un alcoxysiloxane de formule générale

$$R^2{}_aSi(OR^1)_bO_{\frac{4-(a+b)}{2}}$$

dans laquelle :

$R^1$ est un groupe alkyle inférieur ayant jusqu'à 4 atomes de carbone,
$R^2$ est un groupe alkyle ou phényle,
a vaut de 1,0 à 1,2,
b vaut de 0,5 à 1,0,

à la condition que 50 % en poids au moins correspondent à la formule $[R^2Si(OR^1)O]_n$, n = 3 à 8, avec
b) un ou plusieurs polyesters contenant des groupes hydroxy, et le cas échéant
c) un ou plusieurs alcools de faible masse moléculaire,

l'alcoxysiloxane pouvant réagir en totalité ou en partie, ramené à la teneur en groupes ($OR^1$) dans a), mais la réaction est poursuivie au moins jusqu'à obtenir une solution limpide,
comme agents de dispersion de solides.

**2.** Utilisation de résines de silicone selon la revendication 1, **caractérisée en ce que** l'on utilise comme alcoxysiloxane a) des composés dans lesquels $R^1$ est un résidu éthyle.

**3.** Utilisation de résines de silicone selon la revendication 1, **caractérisée en ce que** l'on utilise comme alcoxysiloxane a) des composés dans lesquels $R^2$ est un résidu phényle.

**4.** Utilisation de résines de silicone selon la revendication 1, **caractérisée en ce que** l'on utilise comme alcoxysiloxane a) des composés dans lesquels $R^1$ est un résidu éthyle et $R^2$ est un résidu phényle.

**5.** Utilisation de résines de silicone selon au moins l'une des revendications 1 à 4, **caractérisée en ce que** les polyesters contenant des groupes hydroxy b) sont des produits de réaction d'acides dicarboxyliques ou de leurs dérivés avec des diols.

**6.** Utilisation de résines de silicone selon l'une au moins des revendications 1 à 4, **caractérisée en ce que** les polyesters contenant des groupes hydroxy b) sont des produits de réaction d'acides hydroxycarboxyliques et/ou de leurs lactones avec des diols.

**7.** Utilisation de résines de silicone selon l'une au moins des revendications 1 à 4, **caractérisée en ce que** les polyesters

contenant des groupes hydroxy b) présentent des masses molaires dans la plage de 100 à 10 000 g/ml.

**8.** Utilisation de résines de silicone selon au moins l'une des revendications 1 à 4, **caractérisée en ce que** les alcools de faible masse moléculaire c) sont un ou plusieurs composés du groupe des alcools mono- à tétravalents et/ou des aminoalcools.

**9.** Utilisation de résines de silicone selon au moins l'une des revendications 1 à 8 comme agents de dispersion de solides pour préparer des revêtements, des encres d'impression et/ou des laques d'impression.

**10.** Utilisation de résines de silicone selon au moins l'une des revendications 1 à 8 comme agents de dispersion de solides dans des pâtes pigmentaires.

**11.** Utilisation de résines de silicone selon au moins l'une des revendications 1 à 8 comme agents de dispersion de solides dans des revêtements, des encres d'impression et/ou des laques d'impression durcissables par un rayonnement.

**12.** Utilisation de résines de silicone selon au moins l'une des revendications 1 à 8 comme agents de dispersion de noirs de fumée pour des revêtements, des encres d'impression et/ou des laques d'impression.

**13.** Utilisation de résines de silicone selon au moins l'une des revendications 1 à 8 comme agents de dispersion de noirs de fumée pour des revêtements, des encres d'impression et/ou des laques d'impression durcissables par un rayonnement.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0024503 A
- DE 19732251 A
- WO 9956864 A
- EP 0154678 B
- EP 0159678 A
- EP 0438836 A
- EP 0879860 B
- EP 0092702 A
- DE 3214984 A
- US 3044979 A
- DE 2232419 B
- DE 2521170 A
- DE 2828990 C
- DE 2949725 C
- DE 3412648 C


### In der Beschreibung aufgeführte Nicht-Patentliteratur


- Colour Index. The Society of Dyers and Colorists, 1982, vol. 3
- **H. ENDRISS.** Aktuelle anorganische Bunt-Pigmente. Vincentz Verlag, 1997
- **W. HERBST ; K. HUNGER.** Industrial Organic Pigments. VCH, 1993
- **E.W. FLICK.** Printing Ink and Overprint Varnish Formulations - Recent Developments. Noyes Publications, 1990
- Chemistry & Technology of UV & EB Formulation for Coatings. **C. LOWE ; G. WEBSTER ; S. KESSEL ; I. MCDONALD ; G. RAYNER.** Inks & Paints. Wiley/Sita, 1997, vol. 4